# EUROPEAN PATENT APPLICATION

(11) **EP 2 071 984 A2**
(43) Date of publication of application: **24.06.2009**
(21) Application number: 08254058.4
(22) Date of filing: 18.12.2008
(51) Int. Cl.: A47H 1/02

(54) **Curtain pole connector**

(30) Priority: 18.12.2007 GB 0724609
(71) Applicant: Qualtieri, Orazio, 126 Lordship Road London N16 0QL (GB)
(72) Inventor: Qualtieri, Orazio, 126 Lordship Road London N16 0QL (GB)
(74) Representative: Windsor, Louise

(57) **Abstract**

A connector (10) for connecting the ends of two curtain poles, the connector comprising a generally cylindrical main body (12) formed of two semi-cylindrical sections (14, 16), held longitudinally adjacent each other by at least one resilient member (22) such that the flat surfaces of each section lie facing one another with a gap (18) therebetween, and means to increase the gap between the two sections (26) to expand the overall diameter of the main body.

## Description

The present invention relates to curtain pole connector. More especially, the invention relates to a connector to connect the elbow joints of curtain poles.

Curtain poles are used extensively for hanging curtains. The usual form of such devices comprises an elongate pole, which carries rings slidable along the pole, from which the curtains are suspended. The pole itself is supported adjacent to it's ends, and at it's midpoint when the pole is intended for use with a pair of curtains.

Such known curtain poles are very successful for use with straight windows. They cannot however be used effectively for full-bay or semi-bay windows where bending would be required.

A well recognised problem with curtain poles designed to extend around full-bay or semi-bay windows, for example, is concerned with the connecting mechanism to connect the elbow joints of the curtain poles. All existing connection methods suffer from problems with movement between the poles at the point of connection which can often lead to stress fatigue.

The present invention seeks to alleviate the disadvantages of known connecting mechanisms by providing a connector for insertion into the end each curtain pole and which expands to provide a firm connection between the two poles.

According to a first aspect, there is provided a connector for connecting the ends of two curtain poles, the connector comprising a generally cylindrical main body formed of two semi-cylindrical sections, held longitudinally adjacent each other by at least one resilient member such that the flat surfaces of each section lie facing one another with a gap therebetween, and means to increase the gap between the two sections to expand the overall diameter of the main body.

In a second aspect, there is provided a curtain pole having, extending from one end, a connector according to the first aspect.

Preferably one section has a lateral bore extending therethrough.

Preferably still the expansion means comprises a screw or screw-like member capable of extending through the bore to abut the surface of the second section, thereby to force the two sections apart.

The invention will now be described by way of example with reference to the accompanying drawings, in which :
Figure 1 is a side view of a curtain pole connector constructed in accordance with the present invention;
Figure 2 is an end view of the connector of Figure 1; and
Figure 3 is plan view of the connector of Figures 1 and 2 during use to connect to curtain poles.

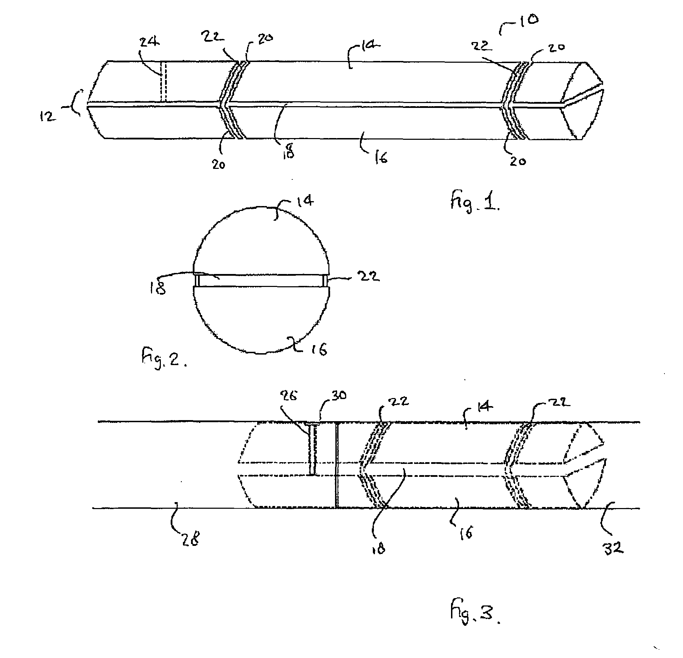

Figure 1 shows a connector 10 for connecting two curtain pole ends together. The connector 10 comprises a generally cylindrical body 12 made from metal. The connector 10 is divided longitudinally along its centre to form first and second semi-cylindrical sections 14, 16. The sections 14, 16 are configured such that flat surfaces of each section 14, 16 lie adjacent one other with a gap 28 therebetween. Lateral grooves 20 are formed in the cylindrical surfaces near to each end of each section 14, 16. An 0-ring 22 constructed from a resilient elastomeric material such as, for example, rubber, is located within each groove 20.

The first section 14 has a lateral bore 24 extending therethrough. The bore 24 has an internal thread to receive a standard screw 26 (see Figure 3). The opening of the bore 24 is slightly sunken into the outer surface of the section 14 such that the head of screw 26, when fully inserted, does not protrude from the top of the surface of the section 14.

As can be seen in Figure 3, the connector 10 is dimensioned to slide into the end of a tubular curtain pole 28. The curtain pole 28 has an aperture 30 through its surface near to the end. The connector 10 is inserted into the end of the curtain pole 28 to such a distance as to align the aperture 30 with the bore 24 of the connector 10. A stop (not shown) may be provided to aid alignment of the aperture 30 and bore 24.

The free end of the connector 10 can now be inserted into the end of a second curtain pole 32.

The screw 26 is then inserted through the aperture 30 and into the bore 24. The tip of the screw 26 extends out of the flat surface of the first section 14 and abuts the flat surface of the second section 16. At this point, continual insertion of the screw 26 forces the gap 18 between the two sections 14, 16 to widen. This, in turn, increases the overall diameter of the connector 10 to force the curved surfaces of the sections against the internal curved walls of the curtain poles 28, 32 to retain the connector 10 firmly in place and consequently to hold the curtain poles 28, 32 firmly together.

The elastomeric O-rings 22 provide a friction between the connector 10 and the internal surface of the curtain poles 28, 32 to increase retention.

In an alternative embodiment, the connector 10 is formed as an integral extension part to the end of the curtain pole 28.

The connector 10 (and the curtain poles for which it is to be used with) could be made of any suitable material.

The above described embodiment has been given by way of example only, and the skilled reader will naturally appreciate that many variations could be made thereto without departing from the scope of the present invention.

## Claims

1. A connector for connecting the ends of two curtain poles, the connector comprising a generally cylindrical main body formed of two semi-cylindrical sections, held longitudinally adjacent each other by at least one resilient member such that the flat surfaces of each section lie facing one another with a gap therebetween, and means to increase the gap between the two sections to expand the overall diameter of the main body.

2. A connector according to claim 1 wherein one section has a lateral bore extending therethrough.

3. A connector according to claim 1 or claim 2 wherein the expansion means comprises a screw or a screw-like member capable of extending through the bore to abut the surface of the second section, thereby to force the two sections apart.

4. A curtain pole having, extending from one end, a connector according to any of claims 1 to 3.

5. A connector substantially as hereinbefore described or referred to in Figures 1 to 3.
